Europäisches Patentamt
European Patent Office
Office européen des brevets

(19)

(11) Veröffentlichungsnummer: **0 002 041**
**A1**

## (12) EUROPÄISCHE PATENTANMELDUNG

(21) Anmeldenummer: **78101348.7**

(22) Anmeldetag: **11.11.78**

(51) Int. Cl.²: **C 09 B 43/00,** C 09 B 55/00, C 07 C 119/06

(30) Priorität: **21.11.77 CH 14184/77**

(43) Veröffentlichungstag der Anmeldung: **30.05.79 Patentblatt 79/11**

(84) Benannte Vertragsstaaten: **CH DE FR GB NL**

(71) Anmelder: **CIBA-GEIGY AG, Patentabteilung Postfach, CH-4002 Basel (CH)**

(72) Erfinder: **Bäbler, Fridolin, Dr., Nussbaumweg 19, CH-4123 Allschwil (CH)**

(54) **Verfahren zur Herstellung von Bisazomethin-bisazopigmenten.**

(57) Verfahren zur Herstellung von Bisazomethinpigmenten der Formel

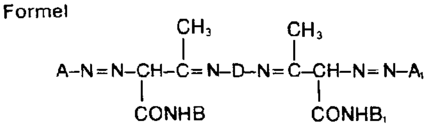

worin A und $A_1$ die Reste von Diazokomponenten, B und $B_1$ carbocyclische oder heterocyclische aromatische Reste und D einen aliphatischen Rest mit 2–6 C-Atomen, einen cycloaliphatischen Rest mit 5–8 C-Atomen oder einen araliphatischen Rest mit 7–10 C-Atomen bedeuten, wobei man

a) ein Azomethin der Formel

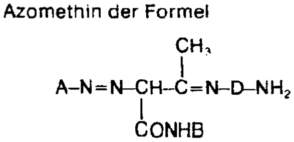

in einem Verdünnungsmittel erhitzt, oder

b) ein Imin oder Azomethin der Formel

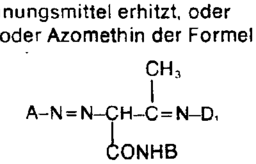

worin $D_1$ ein H-Atom oder eine Alkylgruppe mit 1 bis 6 C-Atomen bedeutet, mit einem Diamin $H_2N–D–NH_2$ in einem Verdünnungsmittel erhitzt.

**EP 0 002 041 A1**

BEZEICHNUNG GEÄNDERT
siehe Titelseite

3-11459+

## Verfahren zur Herstellung von Azopigmenten

In der GB-PS 1 180 420 ist ein Verfahren zur Herstellung von Bisazomethinen durch Kondensation von Farbstoffen der Phenyl-azo-acetoacetarylidreihe mit Alkylendiaminen beschrieben. Diese Reaktion verläuft jedoch unvollständig, sodass man neben dem Bisazomethin noch Anteile an Monoazomethin und Ausgangsfarbstoff erhält, was sich durch eine ungenügende Migrationsechtheit des erhaltenen Pigmentes bemerkbar macht. Ausserdem erlaubt diese Reaktion nur Bisazomethinbildung mit aliphatischen nicht aber mit araliphatischen Diaminen. Schliesslich werden nach diesem Verfahren Bis-azomethine von Azofarbstoffen, die in o-Stellung zur Azogruppe eine Methoxygruppe aufweisen, nur mit geringer Ausbeute erhalten.

Es wurde nun gefunden, dass man Bisazomethinpigmente der Formel

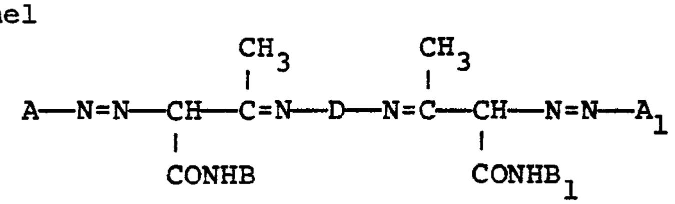

(1)

worin A und $A_1$ die Reste von Diazokomponenten, B und $B_1$ carbocyclische oder heterocyclische aromatische Reste

und D einen aliphatischen Rest mit 2-6 C-Atomen, einen cycloaliphatischen Rest mit 5-8 C-Atomen oder einen araliphatischen Rest mit 7-10 C-Atomen bedeuten, in guter Ausbeute und praktisch ohne migrierende Ausgangs- oder Nebenkomponente erhält, wenn man

a) ein Azomethin der Formel

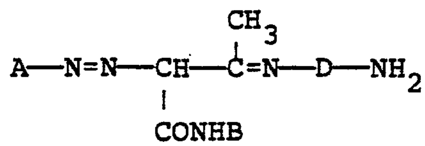 (2)

gegebenenfalls zusammen mit einem Azomethin der Formel

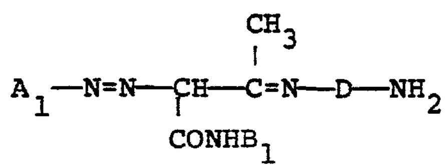 (3)

in einem Verdünnungsmittel erhitzt, oder

b) ein Imin oder Azomethin der Formel

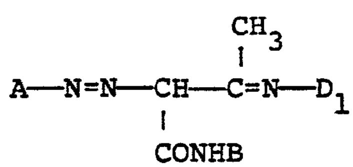 (4)

worin $D_1$ ein H-Atom oder eine Alkylgruppe mit 1 bis 6 C-Atomen bedeutet, mit einem Diamin $H_2N\text{-}D\text{-}NH_2$ oder gegebenenfalls zusammen mit einem Azomethin der Formel 3) in einem Verdünnungsmittel erhitzt.

Die angegebenen Formeln (1),(2),(3) und (4) stellen jeweils eine der möglichen tautomeren Formeln dar.

Man geht vorzugsweise von Azomethinen oder Aminen der angegebenen Formeln aus, worin $A = A_1$ und $B = B_1$ sind.

Bevorzugt sind Azomethine oder Amine der angegebenen Formeln, worin A, $A_1$, B oder $B_1$ einen Rest der Formel

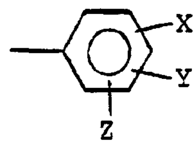

(5)

bedeuten, worin X ein H- oder Halogenatom, eine Alkyl-, Alkoxy- oder Alkylsulfonylgruppe mit 1-4 C-Atomen, eine Alkoxycarbonyl-, Alkylcarbamoyl- oder Alkanoylaminogruppe mit 2-6 C-Atomen, eine Nitro-, Trifluormethyl-, Carboxyl-, Carbamoyl- oder Sulfonsäuregruppe, eine gegebenenfalls durch Halogenatome, Alkyl- oder Alkoxygruppen mit 1-4 C-Atomen substituierte Phenoxy-, Phenoxycarbonyl-, Phenylcarbamoyl-, Benzoylamino- oder Phenylsulfonylgruppe, Y eine Alkyl- oder Alkoxygruppe mit 1-4 C-Atomen, eine Alkoxycarbonylgruppe mit 2-6 C-Atomen, eine Sulfo-, Nitro- oder Trifluormethylgruppe, eine gegebenenfalls durch Halogenatome, Alkyl- oder Alkoxygruppen mit 1-4 C-Atomen substituierte Phenoxy- oder Phenoxycarbonylgruppe, Z ein H- oder Halogenatom oder eine Alkylgruppe mit 1-4 C-Atomen bedeutet, oder worin die Substituenten X und Y einen ankondensierten Benzol- oder 5-6-gliedrigen Heteroring bilden.

Ebenfalls von besonderem Interesse als Ausgangsstoffe sind Verbindungen der Formeln (2), (3) und (4), worin A, $A_1$, B oder $B_1$ einen Rest der Formel

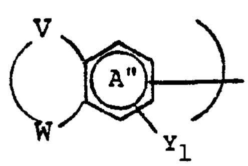

(6)

bedeuten, worin $Y_1$ ein Wasserstoff- oder Halogenatom, eine Alkyl- oder Alkoxygruppe mit 1-4 C-Atomen, W eine Gruppe der Formeln -CONH- oder -NHCO-, und V ein O-Atom oder eine Gruppe der Formeln -NR'-, -NHCO-, -CONH-, -CH=N-,

-CH=C-,
R'

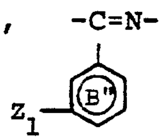

darstellen, wobei R' Wasserstoff, Alkyl mit 1-4 C-Atomen oder gegebenenfalls durch Halogen, Alkyl oder Alkoxy mit 1-4 C-Atomen substituiertes Phenyl und $Z_1$ Wasserstoff, Halogen, Alkyl oder Alkoxy mit 1-4 C-Atomen bedeuten, und die Azogruppe an die Phenylgruppe A" oder B" gebunden sein kann.

Die für das Verfahren a) als Ausgangsstoffe dienenden Azomethine der Formeln(2) und (3) erhält man durch Umsetzung des Ausgangsazofarbstoffes mit einem grösseren Ueberschuss des Diamins. Als Beispiele von Diaminen seien genannt:

Aethylendiamin
1,2- und 1,3-Diaminopropan
1,2-, 1,3- und 1,4-Diaminobutan..

Man verwendet zweckmässig 2-15 Gew.-Teile Diamin auf 1 Gew.-Teil des Azofarbstoffes. Die Umsetzung verläuft in der Regel schon bei Raumtemperatur ohne Wärmezufuhr von aussen. Oft fällt das Azomethin im überschüssigen Diamin aus. Sofern es in Lösung bleibt, oder nur unvollständig ausfällt, kann es durch Zugabe von Wasser oder organischen Lösungsmitteln, wie Methanol, ausgefällt und abfiltriert werden. Gegebenenfalls kann das Produkt auch durch Abdestillieren der Flüssigkeit oder durch Aussalzen isoliert werden. In der Regel können die so erhaltenen Azomethine ohne weitere Reinigung für die Dimerisierung zum Bisazomethin verwendet werden.

Diese erfolgt durch Erhitzen in Wasser oder einem inerten organischen Lösungsmittel auf 40-250°. Als Beispiele für geeignete Lösungsmittel seien genannt: aromatische Kohlenwasserstoffe oder Halogenkohlenwasserstoffe wie Benzol, Toluol, Xylol, Chlorbenzol, o-Dichlorbenzol, Trichlorbenzol, Alkohole, wie Methanol, Aethanol, Isopropanol, Aethyl- oder Methylcellosolve, Nitrile, wie Acetonitril, sowie Dimethylformamid oder Dimethylsulfoxid.

Die zur Herstellung der Azomethine dienende Ausgangsazofarbstoffe erhält man durch Kuppeln eines diazotierten aromatischen Amins mit einem Acetoacetarylid der Formel $CH_3COCH_2CONHB$.

Die als Diazokomponenten dienenden aromatischen Amine können carbocyclischer oder heterocyclischer Natur sein. Als carbocyclische aromatische Amine seien beispielsweise Aminonaphthaline, Aminoanthrachinone, insbesondere aber Aminobenzole erwähnt. Von besonderem Interesse sind Amine der Formel

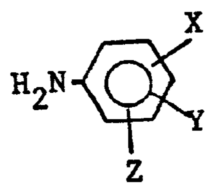

(7)

worin X, Y und Z die oben angegebene Bedeutung haben.

Als heterocyclische aromatische Amine seien insbesondere solche der Formel

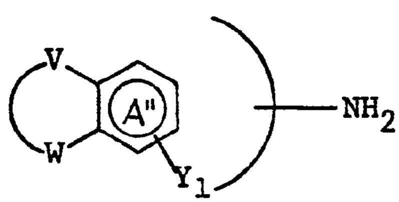

(8)

genannt, worin A", $Y_1$, V und W die oben angegebene Bedeutung haben.

Als Beispiele von Aminen der Formel (7) seien genannt:

Anilin
2-, 3- oder 4-Chloranilin
3,4-Dichloranilin
2,3-Dichloranilin
2,4-Dichloranilin
2,5-Dichloranilin
2,6-Dichloranilin
2,4,5-Trichloranilin
2,4,6-Trichloranilin
2-, 3- oder 4-Bromanilin
2,4-Dibromanilin
2,5-Dibromanilin
2-, 3- oder 4-Methylanilin
2,4-Dimethylanilin
2,5-Dimethylanilin
2-Methyl-5-chloranilin
2-Methyl-4-chloranilin
2-Methyl-3-chloranilin
2-Chlor-5-trifluormethylanilin
2-, 3- oder 4-Nitroanilin
2,4-Dinitroanilin
3-Trifluormethylanilin
3,5-Bistrifluormethylanilin
4-Chlor-2-trifluormethylanilin
4-Chlor-2-nitroanilin
2-Chlor-4-nitroanilin
4-Methyl-2-nitroanilin
4-Methyl-3-nitroanilin
2,4-Dimethyl-3-nitroanilin
2-Methyl-5-nitroanilin
2-Aethyl-5-nitroanilin
2-Methyl-4-nitroanilin
2-Nitro-4-trifluormethylanilin

4-Nitro-2-trifluormethylanilin
2- und 4-Methoxyanilin
3-Chlor-4-methoxyanilin
2-Nitro-4-methoxyanilin
2-Nitro-4-äthoxyanilin
2-Methoxy-5-nitroanilin
2-Methoxy-5-chloranilin
2,5-Dimethoxy-4-chloranilin
2-Methoxy-5-benzylsulfonylanilin
2-Methoxy-5-trifluormethylanilin
2-Aethylsulfonyl-5-trifluormethylanilin
2-Amino-4-trifluormethyl-diphenyläther
2-Amino-4-chlor-diphenyläther
2-Amino-2',4-dichlor-diphenyläther
2-Amino-4,4'-dichlor-diphenyläther
Anthranilsäure
1-Amino-2-chlorbenzol-5-carbonsäure
1-Amino-2-methylbenzol-5-carbonsäure
1-Aminobenzol-2-carbonsäuremethylester
1-Aminobenzol-2-carbonsäureäthylester
1-Aminobenzol-2-chlor-5-carbonsäuremethylester
1-Aminobenzol-2,5-dicarbonsäuremethylester
1-Aminobenzol-2, 3- oder 4-sulfonsäure
1-Amino-2-nitrobenzol-4-sulfonsäure
sowie die in der GB-PS 1 412 924 erwähnten Aminobenzol-carbonsäure- und Aminobenzolsulfonsäureamide, ferner
1-Aminobenzol-3- oder -4-sulfonsäuremethylamid
1-Aminobenzol-3- oder 4-sulfonsäurephenylamid
1-Aminonaphthalin
1-Amino-8-chlornaphthalin
2-Aminonaphthalin

2-Aminonaphthalin-5-sulfonsäureamid
1-Aminoanthrachinon
1-Amino-3-chloranthrachinon
2-Aminoanthrachinon
5-Amino-benzimidazolon-2
5-Amino-1-methyl-benzimidazolon-2
5-Amino-1-n-butyl-benzimidazolon-2
5-Amino-1-phenyl-benzimidazolon-2
5-Amino-1-p-chlorphenyl-benzimidazolon-2
5-Amino-1-p-methylphenyl-benzimidazolon-2
5-Amino-1-p-methoxyphenyl-benzimidazolon-2
5-Amino-6-chlor-benzimidazolon-2
5-Amino-6-brom-benzimidazolon-2
5-Amino-6-methyl-benzimidazolon-2
5-Amino-6-methoxy-benzimidazolon-2
6-Amino-benzoxazolon-2
5-Amino-benzoxazolon-2
5-Amino-7-chlor-benzoxazolon-2
6-Amino-5-chlor-benzoxazolon-2
6-Amino-5-methyl-benzoxazolon-2
6-Amino-5-chlor-benzthiazolon-2
6-Amino-5-methyl-benzthiazolon-2
6-Amino-chinazolon-4
6-Amino-2-methyl-chinazolon-4
6-Amino-2-methoxy-chinazolon-4
6-Amino-7-chlor-2-methyl-chinazolon-4
7-Amino-chinazolon-4
6-Amino-2,4-dihydroxychinazolin
7-Amino-phenmorpholon-3
6-Amino-phenmorpholon-3
7-Amino-6-chlor-phenmorpholon-3
7-Amino-6-methyl-phenmorpholon-3
7-Amino-6-methoxy-phenmorpholon-3
6-Amino-chinolon-2

In den als Kupplungskomponenten dienenden Acetessigaryliden bedeutet B vorzugsweise einen Rest der Formel (5) oder (6).
Man erhält sie zweckmässig durch Umsetzung eines Amins der Formel (7) oder (8) mit Diketen. Als Beispiele seien die oben aufgeführten aromatischen und heterocyclischen Amine genannt.

Die für das Verfahren b) als Ausgangsstoffe dienenden Imine der Formel (4) erhält man zweckmässig durch Umsetzung der Ausgangsmonoazofarbstoffe, wenn $D_1$ ein H-Atom, mit flüssigem Ammoniak unter Druck bei 20-135° C, vorzugsweise bei 70-100° C, wenn $D_1$ eine Alkylgruppe mit 1-6 C-Atomen, mit einem Monoalkylamin von 1-6 C-Atomen bei 20-100° C.

Die Umsetzung der Imine mit dem Diamin erfolgt zweckmässig im Molverhältnis 2:1 bis 1,6 in einem organischen Lösungsmittel, beispielsweise in einem der oben genannten. Anstelle eines einheitlichen Diamins kann auch eine Mischung verschiedener Diamine verwendet werden.

Gegenüber dem Verfahren a) lassen sich nach dem Verfahren b) zusätzlich Bisazomethine mit cycloaliphatischen und araliphatischen Diaminbrücken herstellen. Als cycloaliphatische Diamine seien 1,2-, 1,3- und 1,4-Diaminocyclohexan und als araliphatische Diamine 1,2-, 1,3- und 1,4-Xylidendiamin, sowie 1,2-, 1,3- und 1,4-Tetrachlorxylidendiamin genannt.

Die erhaltenen Pigmente besitzen im allgemeinen eine gute Textur und können meistens als Rohprodukte verwendet werden. Falls nötig oder erwünscht, kann man die Rohprodukte durch Mahlen oder Kneten in eine feindisperse Form überführen. Dabei werden zweckmässig Mahlhilfsmittel, wie anorganische und/oder organische Salze in Gegenwart oder

Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation.

Auch durch Behandeln der Rohpigmente mit organischen Lösungsmitteln kann oft eine Verbesserung der Eigenschaften erreicht werden, z.B. eine erhöhte Deckfähigkeit.

Die erhaltenen Pigmente zeichnen sich durch gute Echtheitseigenschaften insbesondere Migrationsechtheit aus. Sie können zum Pigmentieren von hochmolekularem organischem Material verwendet werden, wie z.B. Celluloseäther und Ester, wie Celluloseacetat, Cellulosepropionat, Celluloseacetoburyrat, Nitrocellulose, ferner Polyolefine, wie Polyäthylen, Polypropylen, substituierte Polyolefine, wie Polyvinylchlorid, Polyvinylacetat, Kopolymerisate aus Vinylchlorid und Vinylacetat, Polystyrol, Polyacrylnitril und Polyacrylsäureester, ferner Aminoplaste, wie Harnstoff- und Melamin-Formaldehydharze, weiter Epoxidharze, Alkydharze, Phenoplaste und Polycarbonate, etc.

Gegenüber den Ausgangsfarbstoffen zeichnen sich die dimerisierten Produkte durch eine wesentlich bessere Migrationsechtheit, höhere Farbstärke und in gewissen Fällen auch andere Nuancen und gegenüber vergleichbaren konventionellen Pigmenten durch leichtere Zugänglichkeit aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Patentbeispiele

Beispiel 1

60 Teile CI Pigment Yellow 3 (CI 11710), werden in 400 Vol.-Teilen Aethylendiamin bei Raumtemperatur während 40 Minuten verrührt. Danach lässt man unter Aussenkühlung mit Eiswasser 800 Teile Wasser innert ca. 30 Minuten zutropfen. Das so ausgefällte Produkt wird abfiltriert, der Filterkuchen mit Wasser neutral gewaschen. Nach dem Trocknen erhält man 64 Teile des gelben Azomethins, welchem laut Mikroanalyse die Formel (9), R = $NH_2$,

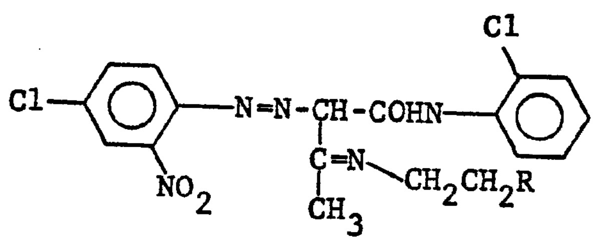 zukommt. (9)

5,6 Teile dieses Azomethins werden in 80 Vol.-Teilen Acetonitril während 16 Stunden am Rückfluss gekocht. Danach wird der Niederschlag bei ca. 50° abfiltriert und mit Acetonitril gewaschen. Nach dem Trocknen erhält man 5,7 Teile des gelben Pigmentes der Formel

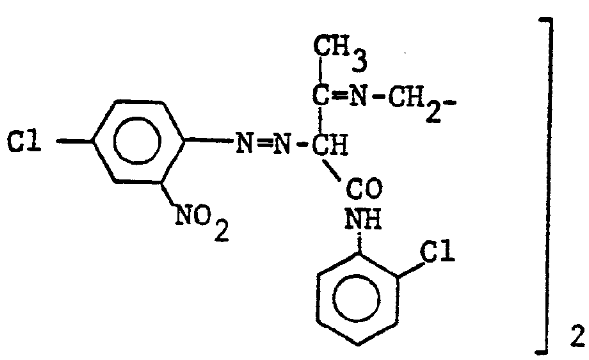 (10)

welches z.B. PVC in einem gegenüber dem Ausgangspigment farbstärkeren und wesentlich migrationsechteren Gelb mit guter Lichtechtheit färbt.

Beispiel 2

Verrührt man 5 Teile des in Beispiel 1, Absatz 1, beschriebenen Monoazomethins aus CI Pigment Yellow 3 und Aethylendiamin während 12 Stunden in 60 Vol.-Teilen Methylisobutylketon am Rückfluss, filtriert das Reaktionsprodukt bei ca. 70° ab, wäscht es mit Methanol, so erhält man nach dem Trocknen 3,9 Teile des ebenfalls in Beispiel 1, Absatz 2 beschriebenen Bisazomethins mit analog guten Eigenschaften.

Beispiel 3

5,8 Teile des gleichen Bisazomethins mit analog guten Eigenschaften erhält man, wenn man 6,6 Teile des in Beispiel 1, Absatz 1 beschriebenen Monoazomethins während 12 Stunden in 50 Vol.-Teilen Toluol bei Rückflusstemperatur rührt, das Reaktionsprodukt bei ca. 70° abfiltriert, mit Methanol wäscht und trocknet.

Beispiel 4

Verrührt man 10,2 Teile eines wasserfeuchten Filterkuchens mit einem Trockengehalt von 43,2 % des in Beispiel 1, Absatz 1 beschriebenen Monoazomethins während 20 Stunden bei Rückflusstemperatur in 100 Teilen Wasser, filtriert das Reaktionsprodukt bei 80°, wäscht den Filterkuchen mit Wasser und trocknet, so erhält man ebenfalls das in Beispiel 1, Absatz 2 beschriebene Bisazomethin, mit ebenso guten Eigenschaften.

Beispiel 5

Verrührt man 4,4 Teile des in Beispiel 1, Absatz 1 beschriebenen Monoazomethins während 20 Stunden in 70 Vol.-Teilen Methanol am Rückfluss, filtriert das Reaktionsprodukt bei 50°, wäscht es mit Methanol, so erhält man nach dem Trocknen 3,7 Teile des in Beispiel 1, Absatz 2 beschriebenen Bisazomethins mit ebenso guten Eigenschaften.

Beispiel 6

Verwendet man 4,4 Teile des in Beispiel 1, Absatz 1 beschriebenen Monoazomethins, verrührt es während ca. 20 Stunden in 70 Vol.-Teilen Isopropanol unter Rückfluss, filtriert das Reaktionsprodukt bei ca. 50°, wäscht es gut mit Isopropanol, so erhält man nach dem Trocknen 3,8 Teile des in Beispiel 1, Absatz 2 beschriebenen Bisazomethins mit ebenso guten Eigenschaften.

Beispiel 7

Verwendet man 25 Teile des in Beispiel 1, Absatz 1 beschriebenen Monoazomethins, verrührt es während 5 Stunden in 150 Vol.-Teilen Dimethylformamid bei 100°, filtriert das Reaktionsprodukt bei ca. 50°, wäscht es mit 50 Vol.-Teilen Dimethylformamid, danach mit 300 Vol.-Teilen Methanol, so erhält man nach dem Trocknen 18,1 Teile des in Beispiel 1, Absatz 2 beschriebenen Bisazomethins mit ebenso guten Eigenschaften.

Beispiel 8

60 Teile CI Pigment Yellow 102, werden in 450 Vol.-Teilen Aethylendiamin bei Raumtemperatur während einer Stunde verrührt. Dabei bildet sich eine violette Lösung. Unter Aussenkühlung mit Eis-Wasser lässt man innert 30 Minuten 1800 Vol.-Teile Methanol zutropfen, wodurch das Reaktionsprodukt rotviolett ausfällt. Nach 10-minütigem Nachrühren wird es bei Raumtemperatur filtriert und mit ca. 1000 Vol.-Teilen Methanol gewaschen. Nach dem Trocknen erhält man 64 Teile des rotvioletten Produktes der Formel

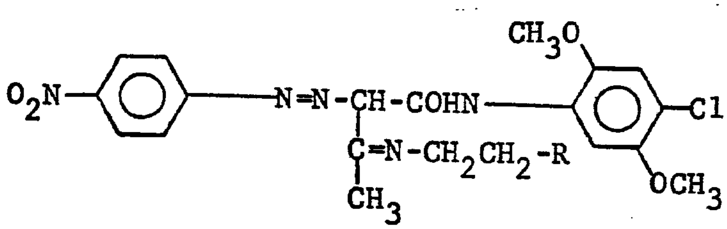

(11)

($R = NH_2$)

15 Teile dieses Monoazomethins werden in 100 Vol.-Teilen Methylisobutylketon während 24 Stunden am Rückfluss gekocht. Danach wird das erhaltene Bisazomethin bei ca. 70° filtriert und mit Methanol gut gewaschen. Nach dem Trocknen erhält man 13,0 Teile des gelben Bisazomethin-Pigmentes der Formel

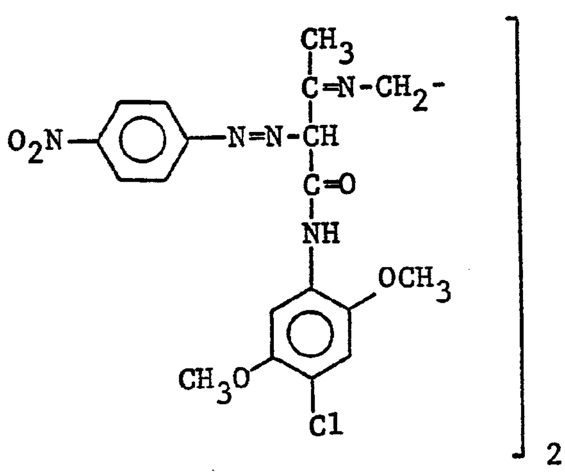

(12)

das PVC in einem gegenüber dem Ausgangspigment farbstärkeren, wesentlich migrationsechteren Gelb mit guter Lichtechtheit färbt.

Beispiel 9

Verrührt man 4,6 Teile des in Beispiel 8, Absatz 1 beschriebenen Monoazomethins während 16 Stunden in 50 Vol.-Teilen Acetonitril am Rückfluss, filtriert das Reaktionsprodukt bei ca. 50°, wäscht es mit Acetonitril, so erhält man nach dem Trocknen 4,0 Teile des in Beispiel 8, Absatz 2 beschriebenen Bisazomethins mit ebenso guten Eigenschaften.

Beispiel 10

Verrührt man 4,6 Teile des in Beispiel 8, Absatz 1 beschriebenen Monoazomethins während 16 Stunden in 50 Vol.-Teilen Toluol am Rückfluss, filtriert das Reaktionsprodukt bei ca. 70°, wäscht es mit Methanol, so erhält man nach dem Trocknen 4,0 Teile des in Beispiel 8, Absatz 2 beschriebenen Bisazomethins mit ebenso guten Eigenschaften.

Beispiel 11

40 Teile CI Pigment Yellow 111 werden in 300 Vol.-Teilen Aethylendiamin während 1 Stunde bei 60-70° verrührt. In die Suspension werden bei 20-25° innert ca. 15 Minuten 700 Teile Wasser getropft. Nach 10-minütigem Nachrühren bei Raumtemperatur wird der gelbe Niederschlag abfiltriert und mit Wasser neutral gewaschen. Nach dem Trocknen erhält man 39 Teile des Monoazomethins der Formel (13), $R = NH_2$

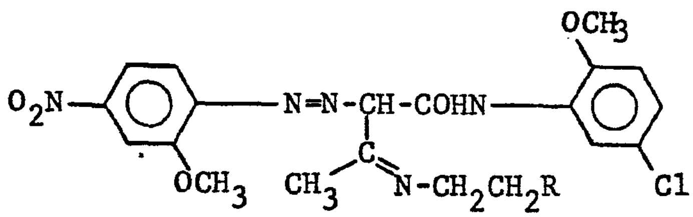

(13)

6,9 Teile dieses Monoazomethins werden in 50 Vol.-Teilen Methylisobutylketon während 12 Stunden am Rückfluss gekocht. Danach wird der Farbkörper bei ca. 70° abfiltriert und mit Methanol gut gewaschen. Nach dem Trocknen erhält man 6 Teile des gelben Bisazomethins, welches in Weich-PVC gegenüber dem Ausgangsprodukt farbstärkere und wesentlich migrationsechtere Färbungen mit guten Lichtechtheiten ergibt.

Beispiel 12

Verrührt man 4,6 Teile des in Beispiel 11, Absatz 1 beschriebenen Monoazomethins während 20 Stunden in 50 Vol.-Teilen Toluol am Rückfluss, filtriert das Reaktionsprodukt bei ca. 70° ab, wäscht es mit Methanol, so erhält man nach dem Trocknen 4,0 Teile des in Beispiel 11,Absatz 2 beschriebenen Bisazomethins mit ebenso guten Eigenschaften.

Beispiel 13

40 Teile CI Pigment Yellow 111 werden in 300 Vol.-Teilen 1,2-Diaminopropan während 1 1/2 Stunden bei 60-70° verrührt. Die braune Suspension wird auf 20-25° gekühlt und bei einer Temperatur von <30° mit 600 ml Wasser verdünnt. Das Reaktionsprodukt wird nach 15 minütigem Rühren abfiltriert, mit Wasser neutral gewaschen und im Vakuum bei 70° getrocknet. Man erhält 39 Teile des gelben Produktes der Formel

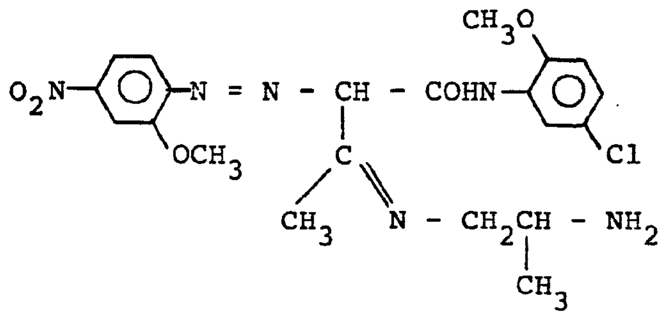

(14)

5 Teile dieses Monoazomethins werden während 6 Stunden in 60 Vol.-Teilen Toluol am Rückfluss verrührt. Danach wird der Farbkörper bei ca. 70° abfiltriert, mit etwas Toluol, dann Methanol gewaschen. Nach dem Trocknen erhält man 4,2 Teile des grünstichiggelben Bisazomethins, welches in PVC gegenüber dem Ausgangspigment farbstärkere und wesentlich migrationsechtere Färbungen mit guten Lichtechtheiten ergibt.

Beispiel 14

Verrührt man 5 Teile des in Beispiel 13, Absatz 1 beschriebenen Monoazomethins während 6 Stunden in 60 Vol.-Teilen Chlorbenzol am Rückfluss, filtriert das Reaktionsprodukt bei ca. 70° ab, wäscht es mit Methanol, so erhält man nach dem Trocknen 4,0 Teile des in Beispiel 13, Absatz 2 beschriebenen Bisazomethins mit analog guten Eigenschaften.

Beispiel 15

30 Teile des CI Pigment Yellow 111 werden in 300 Vol.-Teilen 1,3-Diaminopropan während ca. 1 1/2 Stunden bei 60-70° verrührt. In die Suspension lässt man bei 20-25° innert ca. 15 Minuten 350 Teile Wasser zutropfen, wodurch das Reaktionsprodukt praktisch vollständig ausgefällt wird. Es wird bei Raumtemperatur abfiltriert und mit Wasser neutral gewaschen. Nach dem Trocknen erhält man 30 Teile des gelben Monoazomethins der Formel

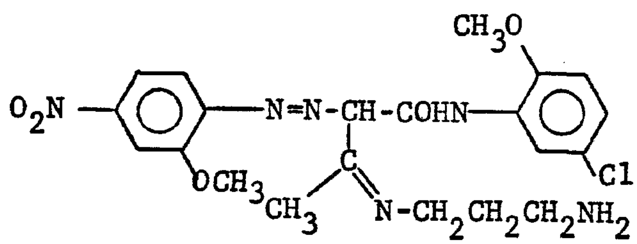

(15)

5 Teile dieses Monoazomethins werden während 24 Stunden in 50 Vol.-Teilen Acetonitril am Rückfluss verrührt. Danach wird der Farbkörper bei ca. 50° abfiltriert und mit Acetonitril gut gewaschen. Nach dem Trocknen erhält man 4,2 Teile des gelben Bisazomethins, welches in PVC gegenüber dem Ausgangspigment farbstärkere und wesentlich migrationsechtere Färbungen mit guten Lichtechtheiten ergibt.

Beispiel 16

10 Teile des in Beispiel 15, Absatz 1 beschriebenen Monoazomethins werden in 100 Vol.-Teilen Chlorbenzol während 4 Stunden am Rückfluss verrührt. Das gelbe Pigment wird bei 70° abfiltriert, mit etwas Chlorbenzol, dann mit Methanol gut gewaschen. Nach dem Trocknen erhält man 7,2 Teile des in Beispiel 15, Absatz 2 beschriebenen Bisazomethins mit analog guten Eigenschaften.

Beispiel 17

40 Teile des CI Pigment Yellow 102 werden in 200 Vol.-Teilen 1,3-Diaminopropan während einer Stunde bei Raumtemperatur verrührt. Es bildet sich eine violette Lösung. Durch Zutropfen von 800 ml Wasser bei einer Temperatur von ca. 30° wird das Reaktionsprodukt ausgefällt. Nach 10 Minuten wird es filtriert und mit Wasser neutral gewaschen. Nach

dem Trocknen erhält man 42 Teile des orange-braunen Produktes der Formel(11), R = $CH_2NH_2$.

5 Teile dieses Monoazomethins werden während 22 Stunden in 60 Vol.-Teilen Toluol bei Rückflusstemperatur gerührt. Danach wird der Farbkörper bei ca. 70° filtriert, mit ca. 100 ml 70° warmem Toluol, dann mit Methanol gewaschen. Nach dem Trocknen erhält man 4,3 Teile des Pigmentes der Formel

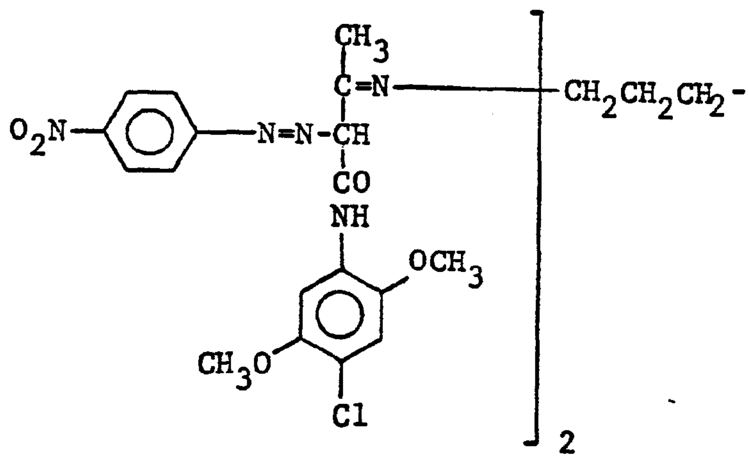

(16)

welches in PVC gegenüber dem Ausgangspigment farbstärkere und wesentlich migrationsechtere orangefarbige Färbungen mit guten Echtheiten ergibt.

Beispiel 18

15 Teile CI Pigment Yellow 74 werden in 180 Vol.-Teilen Aethylendiamin während ca. 1 Stunde bei 60-70° verrührt. Bei 20-25° werden innert ca. 15 Minuten 200 Teile Wasser zur Suspension getropft. Nach 10-minütigem Rühren wird das Produkt abfiltriert und mit Wasser neutral gewaschen. Nach dem Trocknen erhält man 14,1 Teile des gelben Produktes der Formel

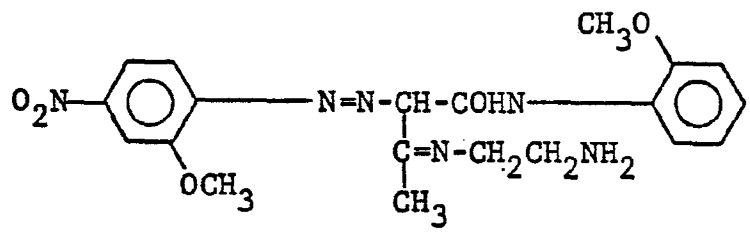

(17)

5 Teile dieses Monoazomethins werden in 60 Teilen Acetonitril während ca. 20 Stunden am Rückfluss gekocht. Danach wird der Farbkörper bei 20-30° abfiltriert und mit Acetonitril gewaschen. Nach dem Trocknen erhält man 4,3 Teile des gelben Bisazomethins, welches in Lacken und Drucktinten farbstarke Färbungen mit guten Echtheiten und gegenüber dem Ausgangspigment wesentlich besserer Ueberlackierechtheit ergibt.

Beispiel 19

10 Teile des orangefarbigen Pigmentes der Formel

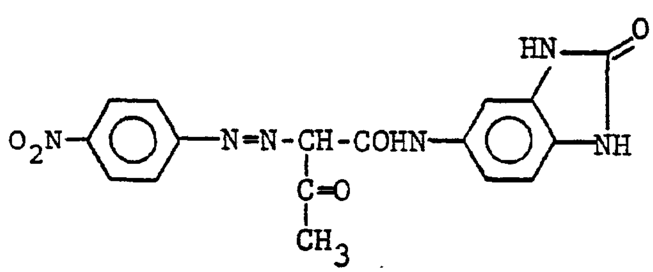

(18)

und 25 Vol.-Teile Aethylendiamin werden während 40 Minuten bei Raumtemperatur verrührt. Innert 5 Minuten werden 150 Teile Wasser bei 20-30° langsam zugegeben. Der Niederschlag wird abfiltriert und mit Wasser neutral gewaschen. Nach dem Trocknen erhält man 8 Teile des Produktes der Formel

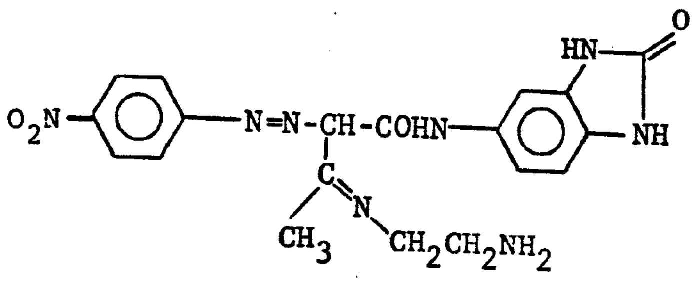

(19)

2,5 Teile dieses Monoazomethins werden in 30 Vol.-Teilen Methylisobutylketon während 20 Stunden bei Rückflusstemperatur verrührt. Die Suspension wird bei 20-30° filtriert und der Filterkuchen gut mit Methanol gewaschen. Nach dem Trocknen erhält man 2 Teile des gelben Bisazomethins, welches in Lacken farbstarke, echte Färbungen ergibt.

Beispiel 20

15 Teile des gelben Monoazopigmentes der Formel

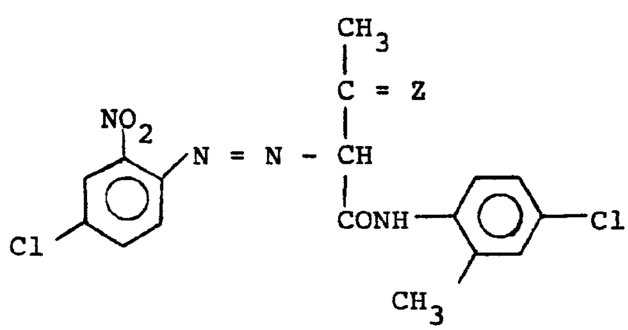

(20)

Z = O

Werden in 90 Vol.-Teilen Aethylendiamin während 1 Stunde bei Raumtemperatur verrührt. Das Pigment geht dabei zuerst in Lösung, dann fällt das Reaktionsprodukt langsam aus. Die Suspension wird mit 350 Teilen Wasser bei einer Temperatur von <30° verdünnt, abfiltriert und mit Wasser neutral gewaschen. Nach dem Trocknen erhält man 14,8 Teile des gelben Monoazomethins der Formel (20), Z = $NCH_2CH_2NH_2$.

10 Teile dieses Monoazomethins werden in 100 Vol.-Teilen Chlorbenzol während 4 1/2 Stunden bei Rückflusstemperatur verrührt. Die Suspension wird bei ca. 80° abfiltriert und der Filterkuchen mit etwas warmem Chlorbenzol, dann mit kaltem Methanol gut gewaschen. Nach dem Trocknen erhält man 6,8 Teile des gelben Bisazomethins, welches eingearbeitet in Weich-PVC-Folien migrationsechte, farbstarke Färbungen ergibt.

Beispiel 21

10 Teile des gelben Monoazopigmentes der Formel

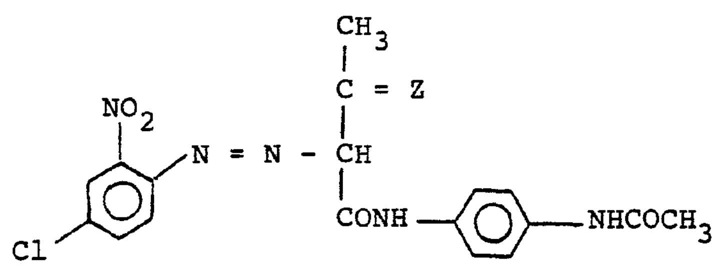

(21)

Z = O

werden in 80 Vol.-Teilen Aethylendiamin bei Raumtemperatur während einer Stunde verrührt. Bei einer Temperatur von <30° lässt man 200 Teile Wasser zur rotbraunen Lösung tropfen. Dabei fällt das Reaktionsprodukt aus, es wird abfiltriert und mit Wasser neutral gewaschen. Nach dem Trocknen erhält man 10,1 Teile des Monoazomethins der Formel 21 ($Z = N\text{-}CH_2CH_2NH_2$).

5 Teile dieses Monoazomethins werden in 60 Vol.-Teilen Chlorbenzol während 4 1/2 Stunden bei Rückflusstemperatur verrührt. Danach wird die Pigmentsuspension bei ca. 70° abfiltriert. Der Filterkuchen wird mit warmem Chlorbenzol, dann mit kaltem Methanol gut gewaschen. Nach dem Trocknen erhält man 4,3 Teile des rotstichig gelben Bisazomethins, welches

eingearbeitet in Weich-PVC-Folien migrationsechte, farbstarke Färbungen ergibt.

Beispiel 22

Verrührt man 6 Teile des in Beispiel 1, Absatz 1 beschriebenen Monoazomethins von CI Pigment Yellow 3 und 2 Teile des in Beispiel 8, Absatz 1 beschriebenen Monoazomethins von CI Pigment Yellow 102 in 100 Vol.-Teilen Chlorbenzol während 4 Stunden am Rückfluss, filtriert die Pigment-Suspension bei ca. 70° ab, wäscht den Filterkuchen mit etwas Chlorbenzol, dann Methanol, so erhält man nach dem Trocknen 6,9 Teile einer Mischung von Bisazomethinen von CI Pigment Yellow 3 und CI Pigment Yellow 102, welche eingearbeitet in Weich-PVC-Folien farbstarke und gegenüber den Ausgangsverbindungen wesentlich migrationsechtere Färbungen ergibt.

Beispiel 23

Verrührt man 5 Teile des in Beispiel 1, Absatz 1 beschriebenen Monoazomethins von CI Pigment Yellow 3 und 5 Teile des in Beispiel 11, Absatz 1 beschriebenen Monoazomethins von CI Pigment Yellow 111 in 100 Vol.-Teilen Methylcellosolve während 5 Stunden am Rückfluss, filtriert die Pigmentsuspension bei ca. 70° ab, wäscht den Filterkuchen mit etwas Methylcellosolve, dann Methanol, so erhält man nach dem Trocknen 8,7 Teile einer Mischung von Bisazomethinen von CI Pigment Yellow 3 und CI Pigment Yellow 111, welche eingearbeitet in Weich-PVC-Walzfolien farbstarke, licht- und migrationsechte Färbungen ergibt.

Beispiel 24

In einem Rührautoklaven werden 100 Teile CI Pigment Yellow 3 mit 700 Vol.-Teilen flüssigem Ammoniak während 5 Stunden

bei 50-55° verrührt. Danach wird das Ammoniak aus dem Autoklaven durch Oeffnung des Ventils bei einer Temp. von >10° verflüchtigt und restliche Spuren von Ammoniak bei 70° im Vakuum entfernt. Man erhält 98 Teile eines braunroten Produktes der Formel

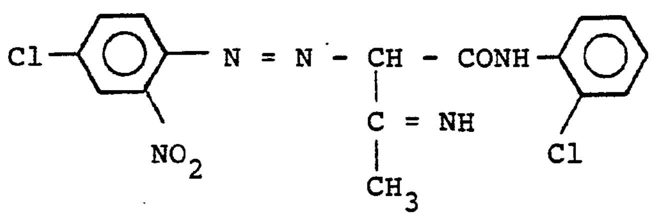

(22)

7,7 Teile dieser Iminoverbindung von CI Pigment Yellow 3, 0,9 Vol.-Teile Aethylendiamin und 100 Vol.-Teile Methylcellosolve werden während 4 Stunden am Rückfluss verrührt. Die gelbe Pigmentsuspension wird bei 70-80° abfiltriert, der Filterkuchen mit etwas Methylcellosolve, dann Methanol gewaschen. Nach dem Trocknen erhält man 6,1 Teile des in Beispiel 1 beschriebenen Bisazomethins von CI Pigment Yellow 3 mit analog guten Eigenschaften.

Beispiel 25

5,7 Teile der in Beispiel 24, Absatz 1 beschriebenen Iminoverbindung von CI Pigment Yellow 3, 2,05 Teile Tetrachlorp-xylidendiamin und 8o Vol.-Teile Methylcellosolve werden während 5 Stunden am Rückfluss verrührt. Die Pigmentsuspension wird abfiltriert, der Filterkuchen mit warmem Methanol gut gewaschen. Nach dem Trocknen erhält man 6,2 Teile des gelben Pigmentes der Formel

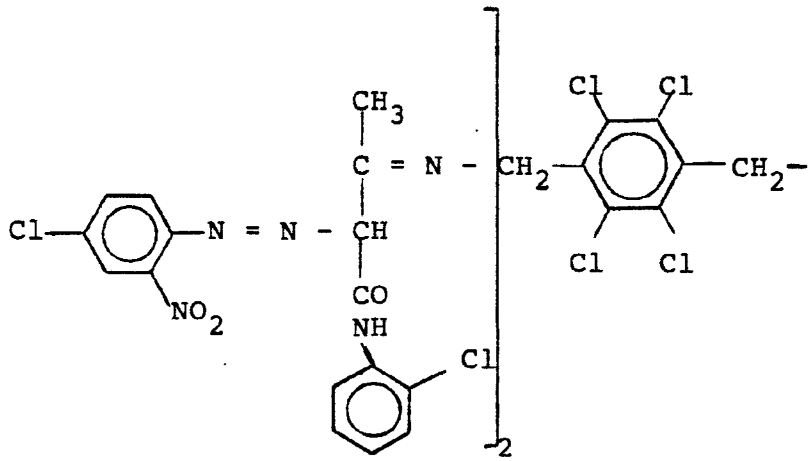

(23)

welches eingearbeitet in Weich-PVC-Walzfolien farbstarke, licht- und migrationsechte Färbungen ergibt.

Beispiel 26

20 Teile CI Pigment Yellow 111 werden in 150 Vol.-Teilen flüssigem Ammoniak während 7 Stunden bei 100° in einem Rührautoklaven verrührt. Danach wird das Ammoniak aus dem Autoklaven durch Oeffnen des Ventils verflüchtigt und restliche Spuren von noch am Produkt anhaftendem Ammoniak bei 70° im Vakuum entfernt. Man erhält 18 Teile des gelben Produktes der Formel

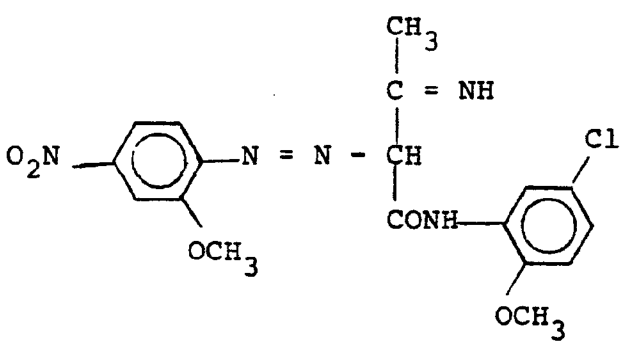

(24)

6 Teile dieser Iminoverbindung von CI Pigment Yellow 111, 0,9 Teile Aethylendiamin und 100 Vol.-Teile Methylcellosolve werden während 4 Stunden am Rückfluss verrührt. Die gelbe Pigmentsuspension wird bei 70-80° abfiltriert,

mit etwas Methylcellosolve, dann Methanol gut gewaschen. Nach dem Trocknen erhält man 5,4 Teile des in Beispiel 11 beschriebenen Bisazomethins von CI Pigment Yellow 111 mit analog guten Eigenschaften.

Beispiel 27

6 Teile der in Beispiel 26, Absatz 1 beschriebenen Iminoverbindung von CI Pigment Yellow 111, 0,9 Teile 1,2-Diaminopropan und 90 Vol.-Teile Methylcellosolve werden während 4 1/2 Stunden am Rückfluss verrührt. Die Pigmentsuspension wird abfiltriert, der Filterkuchen mit Methylcellosolve, dann Methanol gewaschen. Nach dem Trocknen erhält man 5 Teile des in Beispiel 13 beschriebenen Bisazomethins von CI Pigment Yellow 111 mit analog guten Eigenschaften.

Beispiel 28

6 Teile der in Beispiel 26, Absatz 1 beschriebenen Iminoverbindung von CI Pigment Yellow 111, 0,4 Teile Aethylendiamin, 0,4 Teile 1,2-Diaminopropan und 90 Vol.-Teile Methylcellosolve werden während 5 Stunden am Rückfluss verrührt. Die Pigmentsuspension wird abfiltriert, der Filterkuchen mit Methylcellosolve, dann mit Methanol gut gewaschen. Nach dem Trocknen erhält man 5,2 Teile einer Mischung der in den Beispielen 26 und 27 beschriebenen Bisazomethinverbindungen von CI Pigment Yellow 111 mit ausgezeichneten koloristischen Eigenschaften beim Einarbeiten in Weich-PVC-Walzfolien.

Beispiel 29

65 Teile stabilisiertes Polyvinylchlorid, 35 Teile Dioctylphthalat und 0,2 Teile des gemäss Beispiel 1 erhaltenen Pigments werden miteinander verrührt und dann auf einem Zweiwalzenkalander während 7 Minuten bei 140° hin- und hergewalzt. Man erhält eine gelb gefärbte Folie von sehr guter Licht- und Migrationsechtheit.

Beispiel 30

1,00 Teil des nach Beispiel 11 hergestellten Pigments wird mit 4,00 Teilen Druckfirnis der Zusammensetzung

| | | |
|---|---|---|
| 29,4 % | Leinöl-Standöl | (300 Poise), |
| 67,2 % | Leinöl-Standöl | ( 20 Poise), |
| 2,1 % | Kobaltoctoat | ( 8 % Co) und |
| 1,3 % | Bleioctoat | ( 24 % Pb) |

auf einer Engelsmann-Anreibmaschine fein angerieben und hierauf mit Hilfe eines Klischees im Buchdruckverfahren mit 1 $g/m^2$ auf Kunstdruckpapier gedruckt. Man erhält einen starken, reinen Gelbton mit guter Transparenz und gutem Glanz. Im Drei- oder Vierfarbendruck lassen sich durch Uebereinanderdrucken auf Blau sehr brillante Grüntöne erzeugen.

Das Pigment eignet sich auch für andere Druckverfahren, wie Tiefdruck, Offsetdruck, Flexodruck und ergibt hier ebenfalls sehr gute Resultate.

Beispiel 31

15 Teile einer 35 % n-Butanol enthaltenden Kolloidiumwolle, 15 Teile eines mit Ricinusöl modifizierten Phthalatharzes, 15 Teile einer 70%-igen butanolischen Lösung eines Harnstofflackharzes, 20 Teile Butylacetat, 10 Teile Glykolmonoäthyläther, 20 Teile Toluol und 5 Teile Aethanol werden zu einem Lack verarbeitet. Dieser wird anschliessend mit 2 Teilen des Farbstoffs gemäss Beispiel 8 und 2 Teilen Titandioxyd (Rutil) pigmentiert und in einer Kugelmühle gemahlen. Nach dem Spritzen auf Karton und Trocknen des Lackes erhält man einen gelben Ueberzug von sehr guter Licht-, Ueberlackier- und Wetterechtheit.

Beispiel 32

Zu 100 Teilen eines Einbrennlackes, der aus 58,5 Teilen einer 60%-igen Lösung eines Kokosalkydharzes in Xylol, 23 Teilen einer 65%-igen Lösung eines Melaminlackharzes in Butanol, 17 Teilen Xylol und 1,5 Teilen Butanol besteht, gibt man 1 Teil des Farbstoffes gemäss Beispiel 17 und 5 Teile Titandioxyd.

Man mahlt das Gemisch 48 Stunden in einer Kugelmühle und spritzt den so pigmentierten Lack auf eine gereinigte Metalloberfläche. Nach dem Einbrennen bei 120° erhält man eine gelbe Färbung von guter Licht-, Ueberlackier- und Wetterechtheit.

## Patentansprüche

1. Verfahren zur Herstellung von Bisazomethinpigmenten der Formel

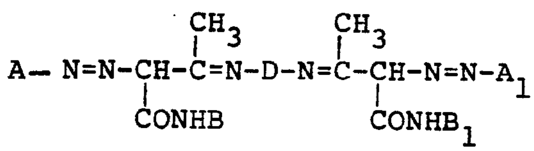

(1)

worin A und $A_1$ die Reste von Diazokomponenten, B und $B_1$ carbocyclische oder heterocyclische aromatische Reste und D einen aliphatischen Rest mit 2-6 C-Atomen, einen cycloaliphatischen Rest mit 5-8 C-Atomen oder einen araliphatischen Rest mit 7-10 C-Atomen bedeuten, dadurch gekennzeichnet, dass man

a) ein Azomethin der Formel

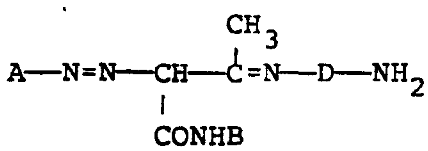

(2)

gegebenenfalls zusammen mit einem Azomethin der Formel

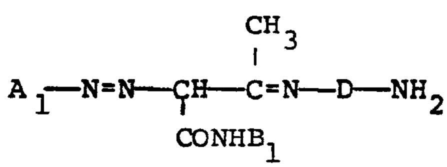

(3)

in einem Verdünnungsmittel erhitzt, oder

b) ein Imin oder Azomethin der Formel

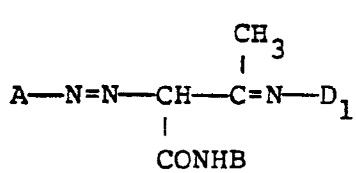

(4)

worin $D_1$ ein H-Atom oder eine Alkylgruppe mit 1 bis 6 C-Atomen bedeutet, mit einem Diamin $H_2N-D-NH_2$ oder gegebenenfalls zusammen mit einem Azomethin der Formel 3) in einem Verdünnungsmittel erhitzt.

2. Verfahren gemäss Anspruch 1, dadurch gekennzeichnet, dass man von Azomethinen oder Iminen der Formeln (2), (3) oder (4) ausgeht, worin $A=A_1$ und $B=B_1$ sind.

3. Verfahren gemäss Anspruch 1, dadurch gekennzeichnet, dass man von einem Azomethin oder Imin der Formeln (2), (3) oder (4) ausgeht, worin A, $A_1$, B oder $B_1$ einen Rest der Formel

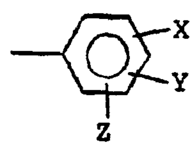

bedeuten, worin X ein H- oder Halogenatom, eine Alkyl-, Alkoxy- oder Alkylsulfonylgruppe mit 1-4 C-Atomen, eine Alkoxycarbonyl-, Alkylcarbamoyl- oder Alkanoylaminogruppe mit 2-6 C-Atomen, eine Nitro-, Trifluormethyl-, Carboxyl-, Carbamoyl- oder Sulfonsäuregruppe, eine gegebenenfalls durch Halogenatome, Alkyl- oder Alkoxygruppen mit 1-4 C-Atomen substituierte Phenoxy-, Phenoxycarbonyl-, Phenylcarbamoyl-, Benzoylamino- oder Phenylsulfonylgruppe, Y eine Alkyl- oder Alkoxygruppe mit 1-4 C-Atomen, eine Alkoxycarbonylgruppe mit 2-6 C-Atomen, eine Sulfo-, Nitro- oder Trifluormethylgruppe, eine gegebenenfalls durch Halogenatome, Alkyl- oder Alkoxygruppen mit 1-4 C-Atomen substituierte Phenoxy- oder Phenoxycarbonylgruppe, Z ein H- oder Halogenatom oder eine Alkylgruppe mit 1-4 C-Atomen bedeutet, oder worin die Substituenten X und Y einen ankondensierten Benzol- oder 5-6-gliedrigen Heteroring bilden.

4. Verfahren gemäss Anspruch 1, dadurch gekennzeichnet, dass man von einem Azomethin oder Imin der Formeln (2), (3) oder (4) ausgeht, worin A, $A_1$, B oder $B_1$ einen Rest der Formel

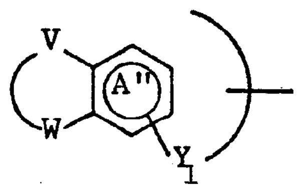

bedeuten, worin $Y_1$ ein Wasserstoff- oder Halogenatom, eine Alkyl- oder Alkoxygruppe mit 1-4 C-Atomen, W eine Gruppe der Formeln -CONH- oder -NHCO-, und V ein O-Atom oder eine Gruppe der Formeln -NR'-, -NHCO-, -CONH-, -CH=N-, -CH=C-,
R'

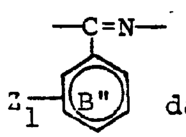

darstellen, wobei R' Wasserstoff, Alkyl mit 1-4 C-Atomen oder gegebenenfalls durch Halogen, Alkyl oder Alkoxy mit 1-4 C-Atomen substituiertes Phenyl und $Z_1$ Wasserstoff, Halogen, Alkyl oder Alkoxy mit 1-4 C-Atomen bedeuten, und die Azogruppe an die Phenylreste A" oder B" gebunden sein kann.

5. Verfahren gemäss Anspruch 1a, dadurch gekennzeichnet, dass man von einem Azomethin der Formeln (2) oder (3) ausgeht, worin D eine Alkylengruppe mit 2-6 C-Atomen bedeutet.

6. Verfahren gemäss Anspruch 1b, dadurch gekennzeichnet, dass man ein Imin der Formel (4) mit einem Diamin der Formel $H_2N-D-NH_2$ umsetzt, worin D eine Alkylengruppe mit 2 bis 6 C-Atomen bedeutet.

7. Verfahren gemäss Anspruch 1b, dadurch gekennzeichnet, dass man ein Imin der Formel (4) mit einem Diamin der Formel $H_2N-D-NH_2$ umsetzt, worin D eine Aralkylengruppe

mit 7-10 C-Atomen bedeutet.

8. Verfahren zur Herstellung von Iminen der Formel

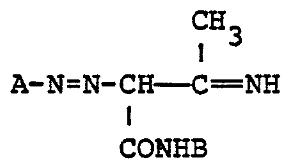

,

worin A und B die im Anspruch 1 angegebene Bedeutung haben, dadurch gekennzeichnet, dass man ein Acetoacetarylid der Formel

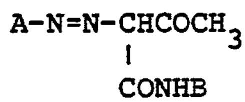

mit flüssigem Ammoniak unter Druck bei 20 bis 135° umsetzt.

Europäisches Patentamt

# EUROPÄISCHER RECHERCHENBERICHT

0002041
Nummer der Anmeldung

EP 78 10 1348

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | C 09 B 43/00<br>55/00<br>C 07 C 119/06 |
| D | GB - A - 1 180 420 (BASF)<br>* Ansprüche *<br>& DE - A - 1 544 398 | 1 | |
| A | FR - A - 1 481 733 (ICI)<br>* Seite 1, ganz; Seite 2, linke Spalte, Absätze 1-3 * | 1 | |
| A | DE - A - 1 928 437 (GEIGY)<br>* Seite 1, Absatz 4 bis Seite 3, Absatz 2 * | 1 | RECHERCHIERTE SACHGEBIETE (Int. Cl.²)<br>C 09 B 43/00<br>55/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 23-02-1979 | GREEN |

EPA form 1503.1 06.78